# EUROPÄISCHE PATENTSCHRIFT

(11) **EP 3 042 593 B1**
(45) Veröffentlichungstag und Bekanntmachung des Hinweises auf die Patenterteilung: **14.03.2018**
(21) Anmeldenummer: 15405001.7
(22) Anmeldetag: 09.01.2015
(51) Int. Cl.: A47J 31/46

(54) **Getränkeauslass für eine Getränkezubereitungsmaschine**
Drinks outlet for a beverage preparation machine
Sortie de boisson pour une machine de préparation de boissons

(43) Veröffentlichungstag der Anmeldung: 13.07.2016
(73) Patentinhaber: JURA Elektroapparate AG, 4626 Niederbuchsiten (CH)
(72) Erfinder: Büttiker, Philipp, 4625 Oberbuchsiten (CH); Probst, Stephan, 4553 Subingen (CH); Ullmann, Erich, 4622 Egerkingen (CH)
(74) Vertreter: EGLI-EUROPEAN PATENT ATTORNEYS

(56) Entgegenhaltungen:
- DE-U1-202008 008 257
- JP-A- 2010 231 585
- US-A- 5 423 245

## Beschreibung

Die Erfindung betrifft einen Getränkeauslass für eine Getränkezubereitungsmaschine, beispielsweise für eine Kaffeemaschine, mit einem Auslassrohr, das einen Ends mit der Getränkezubereitungsmaschine verbindbar ist und anderen Ends eine Auslassöffnung zur Ausgabe eines Getränks aus der Getränkezubereitungsmaschine aufweist, sowie mit einem koaxial zum Auslassrohr verlaufenden Getränkeführungselement, das mit einem ersten Abschnitt innerhalb des Auslassrohres angeordnet ist und mit einem zweiten Abschnitt aus der Auslassöffnung des Auslassrohres hinausragt. Die Erfindung betrifft ferner eine Getränkezubereitungsmaschine mit einem solchen Getränkeauslass.

Derartige Getränkeauslässe sind aus dem Stand der Technik bekannt und werden etwa bei Kaffeemaschinen, insbesondere bei Kaffeevollautomaten oder dergleichen verwendet. Dabei dient das zentrale, koaxial zum Auslassrohr angeordnete und aus diesem teilweise herausragende Getränkeführungselement zur Beruhigung des aus der Auslassöffnung austretenden Getränkestroms, etwa des Kaffeestrahls. Zudem ist es bekannt, dass ein relativ grosser Innendurchmesser des Auslassrohres, etwa von mehr als 6 mm, ebenfalls dazu betragen kann, den austretenden Getränkestrom zu beruhigen.

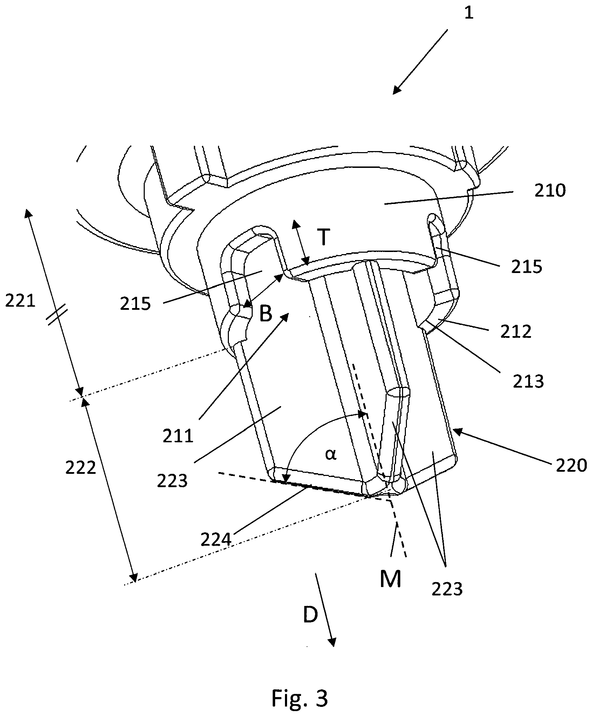

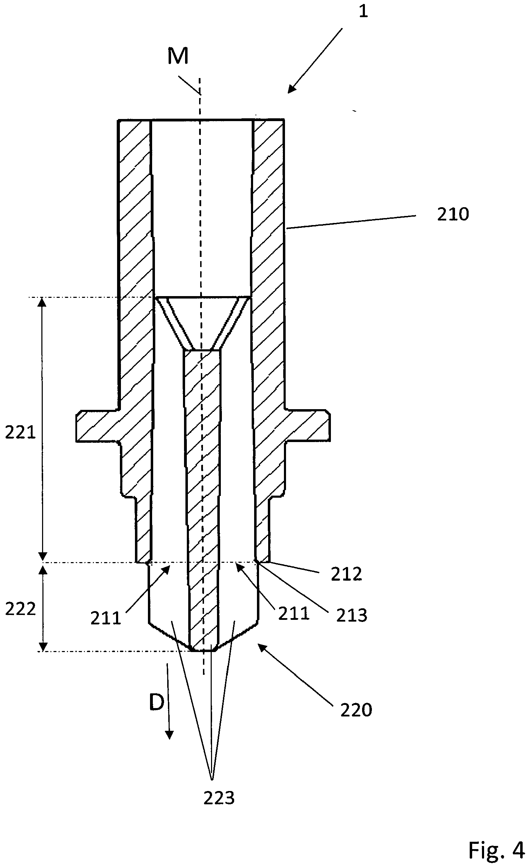

So sind aus dem Stand der Technik (siehe z.B. die JP-A-2010 231585, Fig. 6) mitunter Getränkeführungselemente bekannt, die beispielsweise vier sich bezüglich der Längsrichtung des Getränkeführungselements radial nach außen erstreckende Flügel in Form eines Kreuzes oder Sterns aufweisen. Der erste, innerhalb des Auslassrohres angeordnete Abschnitt des Getränkeführungselements kann etwa eine Länge von 3,5 mm haben, während der zweite Abschnitt typischerweise nur wenige Millimeter, maximal 3 mm, aus der Auslassöffnung des Auslassrohres hinausragt. Zudem kann es vorgesehen sein, dass das Flügelkreuz in Auslassrichtung pyramidenförmig ausgebildet ist. Dabei dient die Pyramidenspitze im Zentrum des austretenden Getränkestroms als Abtropfkante bzw. Abtropfspitze. Die Druckschrift US 5 423 245 A1 offenbart einen Getränkeauslass (dispensing assembly 48), welcher dazu dient, Milchschaum aus einer Getränkebereitungsmaschine auszugeben. Der Getränkeauslass umfasst ein Auslassrohr (discharge tube 36), welches an einem Ende eine Eingangsöffnung (receiving port 58) zum Einlassen von Milchschaum aus einer Misch kammer (swirl chamber 34) zum Mischen von Milch, Luft und Dampf (Milchschaum) aufweist und an diesem einen Ende mit der Mischkammer 34 verbindbar ist und ausserdem an dem anderen Ende eine Auslassöffnung (discharge port 60) zum Ausgeben des Milchschaums aufweist. Das Auslassrohr 36 weist eine röhrenförmig Wand (wall 54) auf, welche einen Innenraum (lumen 56) begrenzt. Der Getränkeauslass 48 weist ausserdem ein Führungselement (laminator 46) auf, welches im Auslassrohr 36 angeordnet ist, um den Milchschaum nach unten aus dem Auslassrohr 36 herauszuführen. Das Führungselement 46 hat die Form einer ebenen Platte, welche ein Paar von ebenen, parallel zueinander angeordneten Oberflächen (surfaces 50, 52) aufweist (Fig. 3 und 4 und Spalte 3, Zeile 65 bis Spalte 4, Zeile 19). Die Wand 54 des Auslassrohrs 36 ist an der Auslassöffnung 60 mit zumindest einem konkaven Einschnitt (concave notch 62) versehen, welcher sich stirnseitig von dem auslassöffnungsseitigen Ende des Auslassrohrs 36 entgegen der Ausgaberichtung des Milchschaums erstreckt. Dieser konkave Einschnitt 62 reduziert die Bildung von Blasen an der Auslassöffnung 60 und wirkt einer Entstehung von Spritzern entgegen (Spalte 4, Zeilen 32-51). Die Wand 54 des Auslassrohrs 36 kann alternativ auch mit einem Paar von konkaven Einschnitten 62 an der Auslassöffnung 60 versehen sein, wobei die beiden konkaven Einschnitten 62 an gegenüberliegenden Seiten des Auslassrohrs 36 angeordnet sind (Spalte 4, Zeilen 32-51). Das Führungselement 46 ist in den Innenraum 56 des Auslassrohrs 36 eingesetzt, sodass das Führungselement 46 den Innenraum 56 in zwei Kammern 70 bzw. 72 teilt. Zumindest an einer der Kammern (z.B. an Kammer 70, wie in Fig. 3 und 4 dargestellt) ist der konkave Einschnitt 62 in der Wand 54 ausgebildet, wobei der konkave Einschnitt 62 einer der ebenen Oberflächen 50, 52 des Führungselements 46 gegen über liegt. Der der Kammer 70 zugeordnete konkave Einschnitt 62 verhindert die Bildung einer Blasenoberfläche an der Auslassöffnung 60 (Spalte 4, Zeile 52 bis Spalte 5, Zeile 2). Das Führungselement 46 erstreckt sich entlang einer zentralen Achse 66 des Auslassrohrs 36 (Fig. 3 und 4) und ist im Auslassrohr 23 symmetrisch bezüglich der Auslassöffnung 60 angeordnet (Spalte 5, Zeilen 3-5). Jede der ebenen Oberflächen 50, 52 des Führungselements 46 bildet eine Fläche einer der beiden Kammern 70 bzw. 72 des Innenraums 56 des Auslassrohrs 36. Weiterhin erstreckt sich das Führungselement 46 entlang der zentralen Achse 66 des Auslassrohrs 36 derart, dass ein Ende (tip end 74) des Führungselements 46 aus der Auslassöffnung 60 herausragt (Fig. 3 und 4). Milchschaum strömt, sobald dieser durch die Eingangsöffnung 58 in das Auslassrohr 46 gelangt, durch die Kammern 70 bzw. 72 des Innenraums 56 zwischen einer Innenfläche (inside surface 84) der Wand 54 und einer der entsprechenden ebenen Flächen 50, 52 des Führungselements 46. Der Milchschaum, welcher die Auslassöffnung 60 verlässt, fliesst schliesslich aus der Auslassöffnung 60 des Auslassrohrs 46 nach unten entlang der ebenen Flächen 50, 52 des Führungselements 46 im Bereich des aus der Auslassöffnung 60 hinausragenden Endes 74 des Führungselements 46 (Spalte 5, Zeilen 28-46). Es hat sich jedoch gezeigt, dass der austretende Getränkestroms trotz vorhandenem Getränkeführungselement mitunter häufig noch zu unruhig ist. So treten bei Kaffeemaschinen, insbesondere bei Kaffeevollautomaten, vielfach Verschmutzungen an der Maschinenfront, der Tassenablage und der Abstellunterlage auf, die durch Spritzer des aus dem Kaffeeauslass austretenden Kaffeestrahls verursacht werden. Diese Spritzer führen zudem etwa beim Bezug eines Cappuccinos zu unerwünschten, brauen Streuungsflecken auf der Oberfläche des weissen Milchschaums. Derartige Spritzeffekte treten jedoch nicht nur bei Kaffeeauslässen von Kaffeemaschinen auf, sondern etwa auch bei Auslässen von Milchaufschäumern an Kaffeemaschinen oder bei anderen Getränkezubereitungsmaschinen, etwa bei Teezubereitungsmaschinen oder Getränkezubereitungsmaschinen, die einen Bezug von verschiedenen Getränken und Flüssigkeiten, beispielsweise Suppen, Tees, Kaffees usw., erlauben.

Aufgabe der Erfindung ist es daher, einen Getränkeauslass für eine Getränkezubereitungsmaschine gleichwelcher Art, jedoch insbesondere für Kaffeemaschinen, sowie eine Getränkezubereitungsmaschine, insbesondere eine Kaffeemaschine anzugeben, bei denen der Getränkestrom deutlich ruhiger aus der Auslassöffnung austritt und bei denen zudem die zuvor beschriebenen Spritzeffekte vermieden oder zumindest minimiert werden.

Diese Aufgabe wird durch einen Getränkeauslass gemäss Anspruchs 1 sowie eine Getränkezubereitungsmaschine gemäss Anspruch 12 gelöst. Vorteilhafte Ausgestaltungen der Erfindung sind Gegenstand der abhängigen Ansprüche.

In erfindungsgemässer Weise wurde erkannt, dass die Unruhe und die Spritzer des austretenden Getränkestroms durch Lufteinschlüsse im Getränkestrom verursacht werden. So wird etwa bei einer Kaffeemaschine, beispielsweise bei einem Kaffeevollautomat, mit geschlossenem Fluidsystem, d.h. bei einer solchen Kaffeemaschinen, die von der Brüheinheit bis zum Kaffeeauslass keine Druckausgleichsöffnungen oder anderweitige Druckausgleichsmöglichkeiten aufweist, nach dem Kaffeebezug durch das Öffnen und Schliessen der Brüheinheit Luft im Fluidpfad eingeschlossen. Diese Lufteinschlüsse wandern beim nächsten Getränkebezug mit dem zubereiteten Getränk in Richtung Getränkeauslass. Auf dem Weg dorthin dehnen sich die Lufteinschlüsse abhängig vom Querschnitt des Fluidpfades weiter aus und können sodann im Bereich der Auslassöffnung zur Bildung von Getränke-Luftblasen führen, die dann typischerweise beim und kurze Zeit nach dem Austritt aus dem Getränkeauslass zerplatzen, was zu den unerwünschten Spritzeffekten und den Unruhemomenten im austretenden Getränkestrom führt.

Um dem entgegenzuwirken, sieht die Erfindung bei den eingangs beschriebenen Getränkeauslässen vor, dass das Auslassrohr drei oder mehr sich stirnseitig von dem auslassöffnungsseitigen Ende des Auslassrohres entgegen der Getränkeausgaberichtung erstreckenden Einschnitte aufweist, wobei jeder dieser Einschnitte eine Durchgangsöffnung zwischen dem Innen- und dem Außenbereich des Auslassrohrs bildet. Weiterhin weist das Getränkeführungselement zumindest im Bereich des zweiten Abschnitts drei oder mehr Flügel auf, wobei sich jeder dieser Flügel von der Mittelachse des Auslassrohrs radial nach außen erstreckt, die Flügel bezüglich des Umfangs des Auslassrohrs gleichmäßig verteilt sind, die Anzahl der Flügel der Anzahl der Einschnitte an dem Auslassrohr entspricht und die Einschnitte über den Umfang des Auslassrohrs derart verteilt sind, dass jedem Segmentraum zwischen zwei benachbarten Flügeln je ein Einschnitt zugeordnet ist.

Hierdurch wird erreicht, dass die im Fluidpfad eingeschlossene Luft sehr schnell seitwärts durch den mindestens einen Einschnitt aus dem Auslassrohr entweichen kann, bevor an der Auslassöffnung grössere Getränke-Luftblasen entstehen, die dann im Weiteren zerplatzen könnten.

Gemäss einer vorteilhaften Ausgestaltung der Erfindung kann jeder der Einschnitte eine halbkreisförmige, rechteckige, quadratische, dreieckige oder trapezförmige Kontur bzw. Form aufweisen (jeweils betrachtet in einer Richtung, welche sich radial zur Längsachse bzw. Mittelachse des Auslassrohrs durch den jeweiligen Einschnitt erstreckt). Diese Formen lassen sich besonders einfach als stirnseitige Einschnitte im Auslassrohr ausbilden und gewährleisten eine hinreichende, seitliche Luftabführung.

So kann es beispielsweise vorgesehen sein, dass bei einem rechteckförmigen Einschnitt die Breite des Einschnittes in Umfangsrichtung des Auslassrohres und die Tiefe des Einschnitts in Längsrichtung des Auslassrohrs etwa 1,5 mm betragen.

Bei einer besonders bevorzugten Ausführungsform der Erfindung ist es vorgesehen, dass jeder der Einschnitte an dem auslassöffnungsseitigen Ende des Auslassrohrs eine Breite in Umfangsrichtung des Auslassrohrs aufweist, die grösser oder gleich ist als die Tiefe des Einschnitts in Längsrichtung des Auslassrohrs. Es hat sich gezeigt, dass sich hierdurch die Blasenbildung an der Auslassöffnung besonders effektiv vermeiden lässt.

Die drei oder mehr Einschnitte bewirken eine Steigerung des seitlichen Luftabführungsvermögens, wobei die Einschnitte vorzugsweise gleichmäßig über den Umfang des Auslassrohrs verteilt sind.

Um trotz stirnseitiger Einschnitte im Auslassrohr entstehende Blasen gleich in der Entstehungsphase vor dem Grösserwerden zu zerstören, kann es bei einer weiteren vorteilhaften Ausführungsform der Erfindung vorgesehen sein, dass das auslassöffnungsseitige Ende des Auslassrohres zur Mittelachse des Auslassrohrs hin eine spitzwinklige oder rechtwinklige Kante aufweist. Eine solche spitzwinklige oder rechtwinklige Kante bewirkt aufgrund ihrer Scharfkantigkeit, dass entstehende Blasen direkt an der Auslassöffnung zerschnitten werden, so dass gegebenenfalls nur minimale Spritzeffekte auftreten, da solche Restblasen aufgrund des Einschnitts - wenn überhaupt- nur sehr klein sind.

Zusätzlich kann es vorgesehen sein, dass der Innendurchmesser des Auslassrohres gegenüber aus dem Stand der Technik bekannten Auslassrohren reduziert ist, damit Blasen, die trotz der erfindungsgemässen Einschnitte u.U. entstehen können, möglichst klein bleiben. So ist der Innendurchmesser des Auslassrohres in vorteilhafter Weise kleiner als 5mm, bevorzugt kleiner oder gleich 4,6 mm.

Neben den Einschnitten bewirkt das erfindungsgemäss vorgesehene Getränkeführungselement, insbesondere der aus der Auslassöffnung in Getränkeausgaberichtung hinausragende zweite Abschnitt des Getränkeführungselements, einerseits, dass der aus der Auslassöffnung austretende Getränkestrom geleitet und beruhigt wird. Andererseits führt der hinausragende zweite Abschnitt unterhalb des auslassöffnungsseitigen Endes des Auslassrohres dazu, dass etwaige kleine Restblasen vor dem Zerplatzen mit dem Getränkestrom mitgerissen werden und so ggf. erst später, etwa in einer unter dem Getränkeauslass stehenden Tasse, Glas, Becher oder dergleichen zerplatzen.

Um diesen vorteilhaften Effekt des zweiten, überstehenden Abschnitts des Getränkeführungselements optimal auszunutzen, kann es bei einer vorteilhaften Ausgestaltung der Erfindung vorgesehen sein, dass der zweite Abschnitt des Getränkeführungselements wenigstens 4 mm, bevorzugt wenigstens 6 mm aus der Auslassöffnung des Auslassrohres hinausragt.

Ein besonders einfach gestaltetes, aber dennoch sehr effektiv wirkendes Getränkeführungselement ist gemäss einer weiteren vorteilhaften Ausgestaltung der Erfindung bereichsweise, insbesondere im ersten und/oder im zweiten Abschnitt des Getränkeführungselements, als Zylinder mit rundem, quadratischem oder gleichmäßig-polyedrischem Querschnitt ausgebildet.

Das Getränkeführungselement weist zumindest im Bereich des zweiten Abschnitts drei oder mehr sich von der Mittelachse des Auslassrohres radial nach außen erstreckende Flügel auf. Derartige Flügel unterstützen in vorteilhafter Weise das Leiten und Beruhigen des aus der Auslassöffnung austretenden Getränkestroms. Dieser Effekt wird in vorteilhafter Weise gesteigert, wenn sich jeder der Flügel in Längsrichtung des Getränkeführungselements über die gesamte Länge des zweiten Abschnitts erstreckt und/oder zumindest bereichsweise auch über den ersten Abschnitt des Getränkeführungselements erstreckt.

Mit dem gleichen Ziel sowie zur Abstützung der Flügel an dem Auslassrohr kann es vorgesehen sein, dass sich der jeweilige Flügel radial bis an das auslassöffnungsseitige Ende des Auslassrohres und/oder bis an die Innenseite des Auslassrohres erstreckt, insbesondere mit dem auslassöffnungsseitigen Ende und/oder der Innenseite des Auslassrohres verbunden ist.

Ferner kann nach einer weiteren vorteilhaften Ausgestaltung der Erfindung jeder der Flügel eine in Getränkeausgaberichtung weisende Flügelkante aufweisen, die in Getränkeausgaberichtung zur Mittelachse des Auslassrohrs hin unter einem Winkel kleiner 90°, insbesondere grösser 45°, bevorzugt unter 60°, geneigt ist. Hierdurch wird erreicht, dass der austretende Getränkestrom zur Mittelachse des Auslassrohres hin geleitet wird und somit an der Mittelachse des Auslassrohrs konzentriert und bezüglich der Mittelachse des Auslassrohrs zentriert wird. Letzteres führt zu einer besonders stark ausgeprägten Zentrierung eines aus der Austrittsöffnung austretenden Getränkestroms bezüglich der Mittelachse des Auslassrohrs. Ausserdem können etwaige, nach der Getränkeausgabe aus dem Auslass rinnende Getränkereste aufgrund der geneigten Flügelkante zentral im Bereich der Mittelachse des Auslassrohres abtropfen.

In vorteilhafter Weise weist das Getränkeführungselement mehrere, insbesondere drei, vier, fünf, sechs oder sieben, bevorzugt drei Flügel auf, die insbesondere bezüglich des Umfangs des Auslassrohrs gleichmäßig verteilt sind.

Um die vorteilhafte Wirkung der Einschnitte im Auslassrohr mit dem Effekt der Flügel optimal auszunutzen, ist es vorgesehen, dass die Anzahl der Flügel der Anzahl der Einschnitte an dem Auslassrohr entspricht, wobei vorzugsweise jedem Segmentraum zwischen zwei benachbarten Flügeln je ein Einschnitt zugeordnet ist.

Bevorzugt ist das Getränkeführungselement mit den Flügeln einteilig ausgebildet.

Die vorliegende Erfindung betrifft ferner eine Getränkezubereitungsmaschine, beispielsweise eine Kaffeemaschine, insbesondere einen Kaffeevollautomaten, mit einem erfindungsmässen Getränkeauslass, wie zuvor beschrieben.

Weitere Ziele, Vorteile und Anwendungsmöglichkeiten der vorliegenden Erfindung ergeben sich aus der nachfolgenden Beschreibung eines Ausführungsbeispiels anhand der Zeichnungen. Es zeigen:
- Fig.1: eine Ausführungsform eines nicht erfindungsgemässen Getränkeauslasses in einer perspektivischen Ansicht,
- Fig. 2: Getränkeauslass gemäss Fig. 1 in Schnittdarstellung,
- Fig. 3: eine vorteilhafte Ausführungsform des erfindungsgemässen Getränkeauslasses in einer perspektivischen Ansicht,
- Fig. 4: Getränkeauslass gemäss Fig. 3 in einem Längsschnitt entlang einer Mittelachse des Auslassrohres, und
- Fig. 5: Getränkeauslass gemäss Fig. 3 in einer Ansicht von unten.

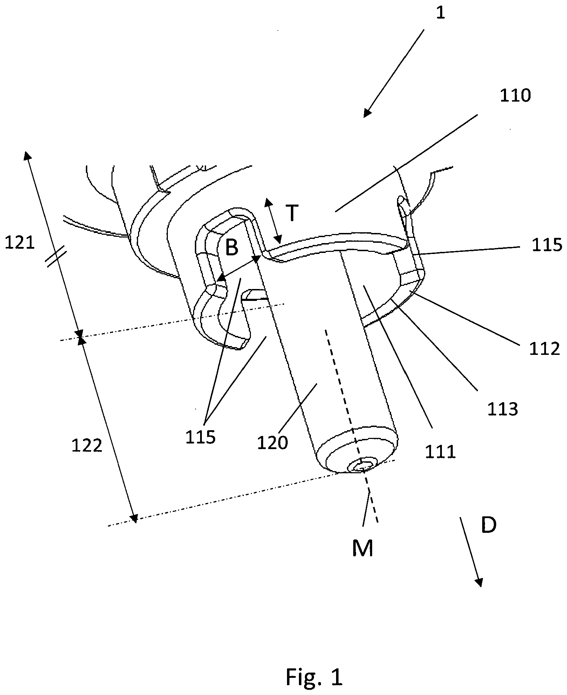

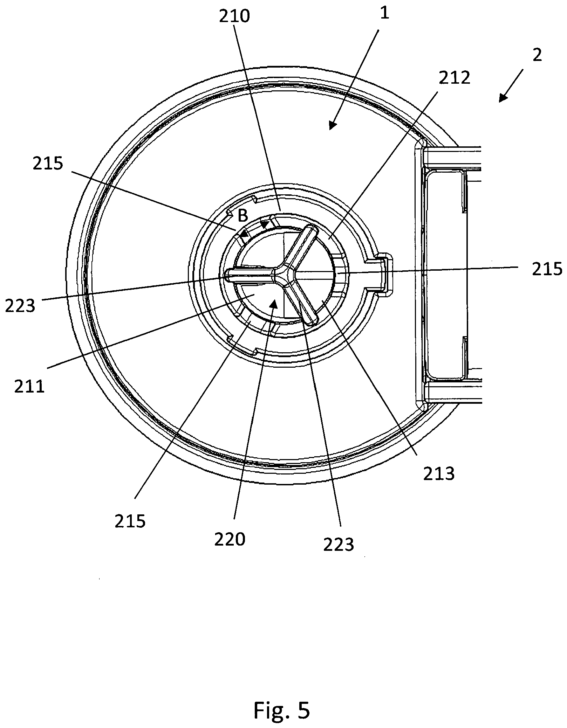

Die Fig. 1 bis 5 zeigen zwei Aus führungs formen eines Getränkeauslasses 1, die sich vornehmlich in der konkreten Ausgestaltung des Getränkeführungselements unterscheiden.

Bei beiden, in den Fig. 1 und 2 bzw. Fig. 3 - 5 gezeigten Ausführungsformen des Getränkeauslasses 1 weist dieser ein Auslassrohr 110, 210 auf, das einen Ends mit einer Getränkezubereitungsmaschine 2, vorliegend beispielhaft einem Kaffeevollautomat, verbunden ist und anderen Ends 112, 212 eine Auslassöffnung 111, 211 zur Ausgabe eines Getränks, vorliegend eines Kaffeegetränks, aufweist. Hierzu ist der Getränkeauslass über einen Fluidpfad mit einer in den Figuren nicht dargestellten Brühgruppe des Kaffeevollautomaten strömungsverbunden.

Ferner weist der Getränkeauslass 1 bei beiden, vorliegend gezeigten Ausführungsformen gemäss Fig. 1 und 2 bzw. Fig. 3 - 5 jeweils ein koaxial zum Auslassrohr 110, 210 verlaufendes Getränkeführungselement 120, 220 auf, das mit einem ersten Abschnitt 121, 221 innerhalb des Auslassrohres 110, 210 angeordnet ist und mit einem zweiten Abschnitt 122, 222 aus der Auslassöffnung 111, 211 des Auslassrohres 110, 210 hinausragt, wobei das auszugebende Getränke an der Auslassöffnung 111, 211 aus dem Raumbereich zwischen der Innenwand des Auslassrohrs 110, 210 und dem Getränkeführungselement 120, 220 austritt.

Das Getränkeführungselement 120, 220, insbesondere der aus der Auslassöffnung in Getränkeausgaberichtung D hinausragende zweite Abschnitt 122, 222, bewirkt, dass der aus der Auslassöffnung 111, 211 austretende Getränkestrom geleitet und beruhigt wird. Ausserdem führt der überstehende zweite Abschnitt 122, 222 unterhalb des auslassöffnungsseitigen Endes 112, 212 des Auslassrohres 110, 210 dazu, dass etwaige kleine Restblasen vor dem Zerplatzen mit dem Getränkestrom mitgerissen werden und so ggf. erst später, etwa in einer unter dem Getränkeauslass 1 stehenden Tasse, Glas oder Becher zerplatzen. Bevorzugt ragt hierzu der zweite Abschnitt 122, 222 des Getränkeführungselements 120, 220 wenigstens 4 mm, vorliegend etwa 6 mm, aus der Auslassöffnung 111, 211 des Auslassrohres 110, 210 hinaus.

Um bereits die Entstehung von Blasen zu unterdrücken, weist das Auslassrohr 110, 210 gemäss der Erfindung drei oder mehr sich stirnseitig von dem auslassöffnungsseitigen Ende 112, 212 entgegen der Getränkeausgaberichtung D erstreckende Einschnitte 115, 215 auf, die jeweils eine Durchgangsöffnung zwischen Innen- und Außenbereich des Auslassrohrs 110, 210bilden. Hierdurch wird erreicht, dass die im Fluidpfad eingeschlossene Luft sehr schnell seitwärts durch die Einschnitte 115, 215 aus dem Auslassrohr 110, 210 entweichen kann, noch bevor an der Auslassöffnung 111, 211 grössere Getränke-Luftblasen entstehen, die dann im Weiteren (d.h. bezüglich der Getränkeausgaberichtung D strömungsabwärts des auslassöffnungsseitigen Endes 112, 212 des Auslassrohres 110, 210) zerplatzen könnten.

In den beiden vorliegend gezeigten, alternativen Ausführungsformen des Getränkeauslasses 1 gemäss Fig. 1 und 2 bzw. Fig. 3 - 5 sind jeweils insgesamt drei rechteckförmige Einschnitte 115, 215 vorgesehen, die gleichmäßig über den Umfang des Auslassrohrs 110, 210 verteilt sind. Die vorstehend gennannte Bezeichnung "rechteckförmig" bezeichnet in diesem Zusammenhang die Form der Kontur des jeweiligen Einschnitts 115 bzw. 215, betrachtet in einer Richtung, welche sich radial zur Mittelachse M des Auslassrohrs 110, 210 durch den jeweiligen Einschnitt 115 bzw. 215 erstreckt. Alternativ könnte der jeweilige Einschnitt 115 bzw. 215 allerdings auch eine halbkreisförmige, quadratische, dreieckige oder trapezförmige Form oder eine andere, von den vorstehend genannten Formen abweichende Form aufweisen.

Insbesondere ist die Breite B eines jeden Einschnittes 115, 215 in Umfangsrichtung des Auslassrohrs 110, 210 gleich der Tiefe T des Einschnitts 115, 215 in Längsrichtung des Auslassrohrs 110, 210. Vorliegend beträgt die Tiefe T und die Breite B jeweils 1,5 mm. Bevorzugt ist aber, die Breite B eines jeden Einschnittes 115, 215 grösser als die Tiefe T zu wählen. Es hat sich nämlich gezeigt, dass diese spezielle Ausgestaltung der Einschnitte 115, 215 besonders gut dazu eignet ist, eine hinreichend effektive seitlich Luftabführung aus dem Auslassrohr 110, 210 zu gewährleisten.

Zudem weist das auslassöffnungsseitige Ende 112, 212 bei beiden Ausführungsformen des Auslassrohres 110, 210 zur Mittelachse M des Auslassrohrs 110, 210 hin eine rechtwinklige und somit scharfe Kante 113, 213 auf, die bewirkt, dass trotz Einschnitten 115, 215 dennoch entstehende Blasen direkt an der Auslassöffnung 111, 211 zerschnitten werden, so dass gegebenenfalls nur minimale Spritzeffekte auftreten.

Zusätzlich kann es vorgesehen sein, dass der Innendurchmesser des Auslassrohres 110, 210 möglichst klein gewählt ist, damit Blasen, die trotz der erfindungsgemässen Einschnitte u.U. entstehen können, möglichst klein bleiben. So beträgt der Innendurchmesser des Auslassrohres 110, 210 bei beiden vorliegenden Ausführungsbeispielen 4,6 mm.

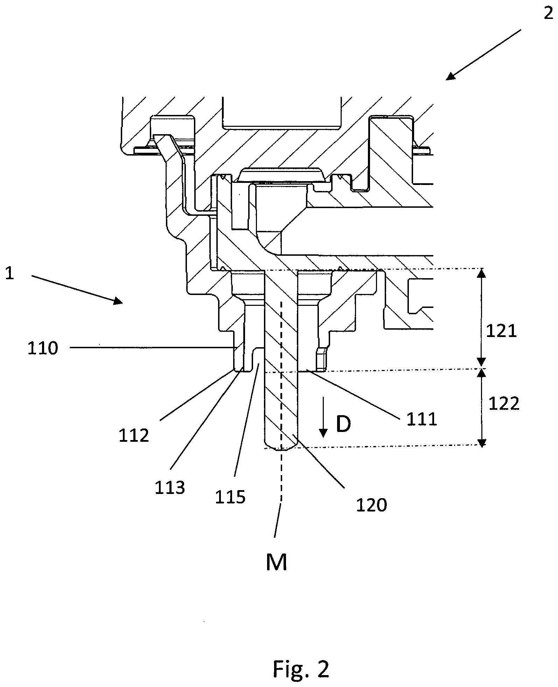

Bei der nicht erfindungsgemässen Ausführungsform gemäss Fig. 1 und 2 ist das Getränkeführungselement 120 sowohl im ersten als im zweiten Abschnitt 121, 122 als Zylinder mit rundem Querschnitt ausgebildet Dies stellt eine besonders einfache und kostengünstige, gleichsam aber dennoch hinreichend wirksame Ausgestaltung des Getränkeführungselements 120 dar.

Wie insbesondere in Fig. 2 zu erkennen ist, läuft das in Ausgaberichtung D gelegene Ende des Getränkeführungselements 120 kegelspitz- oder kegelstumpfförmig zu bzw. ist abgerundet. Hierdurch wird erreicht, dass nachrinnende Getränkereste zentral im Bereich der Mittelachse M des Auslassrohres 110 abtropfen können.

Bei der erfindungsgemässen Ausführungsform gemäss Fig. 3 - 5 weist das Getränkeführungselement 220 insgesamt drei sich von der Mittelachse M des Auslassrohrs 210 radial nach außen erstreckende Flügel 223 auf. Die Flügel 223 erstrecken sich in Längsrichtung des Getränkeführungselements 220 über die gesamte Länge des zweiten Abschnitts 222 und zumindest bereichsweise auch über den ersten Abschnitt 221 des Getränkeführungselements 220.

Ferner erstrecken sich die Flügel 223 radial bis an das auslassöffnungsseitige Ende 212 des Auslassrohres 210 bzw. bis an die Innenseite des Auslassrohres 210. Insbesondere sind die Flügel 223 in dem vorliegend gezeigten Ausführungsbeispiel mit dem auslassöffnungsseitigen Ende 212 und der Innenseite des Auslassrohres 210 verbunden. Insgesamt ist das Getränkeführungselement 220 mit den Flügeln 223 im Sinne einer einfachen und kostengünstigen Herstellung einteilig ausgebildet.

Ausserdem weisen die drei Flügel 223 jeweils eine in Getränkeausgaberichtung D weisende Flügelkante 224 auf, die in Getränkeausgaberichtung D zur Mittelachse M des Auslassrohrs 210 hin unter einem Winkel α von 60° geneigt ist. Hierdurch weist das dreiflügelige, sternartige Getränkeführungselement 220 einen in Getränkeausgaberichtung D weisenden pyramidenförmige Endabschnitt auf, der es nachrinnenden Getränkeresten ermöglicht, zentral im Bereich der Mittelachse M des Auslassrohres 110 abzutropfen.

## Patentansprüche

1. Getränkeauslass (1) für eine Getränkezubereitungsmaschine (2), beispielsweise für eine Kaffeemaschine, mit einem Auslassrohr (110, 210), das einen Ends mit der Getränkezubereitungsmaschine (2) verbindbar ist und anderen Ends (112, 212) eine Auslassöffnung (111, 211) zur Ausgabe eines Getränks aus der Getränkezubereitungsmaschine (2) aufweist, sowie mit einem koaxial zum Auslassrohr (110, 210) verlaufenden Getränkeführungselement (120, 220), das mit einem ersten Abschnitt (121, 221) innerhalb des Auslassrohres (110, 210) angeordnet ist und mit einem zweiten Abschnitt (122, 222) aus der Auslassöffnung (111, 211) des Auslassrohres (110, 210) hinausragt, **dadurch gekennzeichnet, dass** das Auslassrohr (110, 210) drei oder mehr sich stirnseitig von dem auslassöffnungsseitigen Ende (112, 212) des Auslassrohres (110, 210) entgegen der Getränkeausgaberichtung (D) erstreckende Einschnitte (215) aufweist, wobei jeder dieser Einschnitte (215) eine Durchgangsöffnung zwischen dem Innen- und Außenbereich des Auslassrohrs (110, 210) bildet,
wobei das Getränkeführungselement (220) zumindest im Bereich des zweiten Abschnitts (222) drei oder mehr Flügel (223) aufweist und sich jeder dieser Flügel von der Mittelachse (M) des Auslassrohrs (210) radial nach außen erstreckt,
wobei die Flügel (223) bezüglich des Umfangs des Auslassrohrs (210) gleichmäßig verteilt sind, und
wobei die Anzahl der Flügel (223) der Anzahl der Einschnitte (215) an dem Auslassrohr (210) entspricht und die Einschnitte (215) über den Umfang des Auslassrohrs (210) derart verteilt sind, dass jedem Segmentraum zwischen zwei benachbarten Flügeln (223) je ein Einschnitt (215) zugeordnet ist.

2. Getränkeauslass (1) nach Anspruch 1, **dadurch gekennzeichnet, dass** jeder der Einschnitte (115, 215) eine halbkreisförmige, rechteckige, quadratische, dreieckige oder trapezförmige Form aufweist.

3. Getränkeauslass (1) nach Anspruch 1 oder 2, **dadurch gekennzeichnet, dass** jeder der Einschnitte (115, 215) an dem auslassöffnungsseitigen Ende (112, 212) des Auslassrohrs (110, 210) eine Breite (B) in Umfangsrichtung des Auslassrohrs aufweist, die grösser oder gleich ist, als die Tiefe (T) des Einschnitts (115, 215) in Längsrichtung des Auslassrohrs (110, 210).

4. Getränkeauslass (1) nach einem der Ansprüche 1 bis 3, **dadurch gekennzeichnet, dass** die Einschnitte (215) gleichmäßig über den Umfang des Auslassrohrs (110, 210) verteilt sind.

5. Getränkeauslass (1) nach einem der Ansprüche 1 bis 4, **dadurch gekennzeichnet, dass** das auslassöffnungsseitige Ende (112, 212) des Auslassrohres (110, 210) zur Mittelachse (M) des Auslassrohrs (110, 210) hin eine spitzwinklige oder rechtwinklige Kante (113, 213) aufweist.

6. Getränkeauslass (1) nach einem der Ansprüche 1 bis 5, **dadurch gekennzeichnet, dass** das Getränkeführungselement (120) bereichsweise, insbesondere im ersten und/oder im zweiten Abschnitt (121, 122) des Getränkeführungselements (120), als Zylinder mit rundem, quadratischem oder gleichmäßig-polyedrischem Querschnitt ausgebildet ist.

7. Getränkeauslass (1) nach einem der Ansprüche 1 bis 6, **dadurch gekennzeichnet, dass** sich jeder der Flügel (223) in Längsrichtung des Getränkeführungselements (220) über die gesamte Länge des zweiten Abschnitts (222) erstreckt und/oder zumindest bereichsweise auch über den ersten Abschnitt (221) des Getränkeführungselements (220) erstreckt.

8. Getränkeauslass (1) nach einem der Ansprüche 1 bis 7, **dadurch gekennzeichnet, dass** jeder der Flügel (223) sich radial bis an das auslassöffnungsseitige Ende (212) des Auslassrohres (210) und/oder bis an die Innenseite des Auslassrohres (210) erstreckt, insbesondere mit dem auslassöffnungsseitigen Ende (212) und/oder der Innenseite des Auslassrohres (210) verbunden ist.

9. Getränkeauslass (1) nach einem der Ansprüche 1 bis 8, **dadurch gekennzeichnet, dass** jeder der Flügel (223) eine in Getränkeausgaberichtung (D) weisende Flügelkante (224) aufweist, die in Getränkeausgaberichtung (D) zur Mittelachse (M) des Auslassrohrs (210) hin unter einem Winkel (α) kleiner 90°, insbesondere grösser 45°, bevorzugt kleiner 60°, geneigt ist.

10. Getränkeauslass (1) nach einem der Ansprüche 1 bis 9, **dadurch gekennzeichnet, dass** das Getränkeführungselement (220) mit den Flügeln (223) einteilig ausgebildet ist.

11. Getränkeauslass (1) nach einem der vorhergehenden Ansprüche, **dadurch gekennzeichnet, dass** der zweite Abschnitt (122, 222) des Getränkeführungselements (120, 220) wenigstens 4 mm bevorzugt wenigstens 6 mm aus der Auslassöffnung (111, 211) des Auslassrohres (110, 210) in Getränkeausgaberichtung (D) hinausragt.

12. Getränkezubereitungsmaschine (2), beispielsweise Kaffeemaschine, mit einem Getränkeauslass (1) nach einem der vorhergehenden Ansprüche.

## Claims

1. A beverage outlet (1) for a beverage preparation machine (2), for example for a coffee maker, comprising an outlet tube (110, 210), one end of which can be connected to the beverage preparation machine (2) and the other end (112, 212) of which has an outlet opening (111, 211) for dispensing a beverage from the beverage preparation machine (2), as well as comprising a beverage guide element (120, 220), which runs coaxially to the outlet tube (110, 210) and a first section (121, 221) of which is arranged inside the outlet tube (110, 210) and a second section (122, 222) of which projects out of the outlet opening (111, 211) of the outlet tube (110, 210), **characterized in that** the outlet tube (110, 210) has three or morenotches (215), which extend frontally from the outlet opening-side end (112, 212) of the outlet tube (110, 210) opposite to the beverage dispensing direction (D), wherein each of these notches (215) forms a passage opening between the inner and the outer area of the outlet tube (110, 210), wherein the beverage guide element (220) has three or more wings (223) at least in the area of the second section (222), and each of these wings extends from the central axis (M) of the outlet tube (210) radially to the outside, wherein the wings (223) are distributed evenly with regard to the circumference of the outlet tube (210), and wherein the number of the wings (223) corresponds to the number of the notches (215) on the outlet tube (210) and the notches (215) are distributed across the circumference of the outlet tube (210) such that in each case a notch is assigned to each segment space between two adjacent wings (223) .

2. The beverage outlet (1) according to claim 1, **characterized in that** each of the notches (115, 215) has a semicircular, rectangular, square, triangular or trapezoidal shape.

3. The beverage outlet (1) according to claim 1 or 2, **characterized in that**, on the outlet opening-side end (112, 212) of the outlet tube (110, 210), each of the notches (115, 215) has a width (B) in circumferential direction of the outlet tube, which is larger than or equal to the depth (T) of the notch (115, 215) in longitudinal direction of the outlet tube (110, 210).

4. The beverage outlet (1) according to one of claims 1 to 3, **characterized in that** the notches (215) are distributed evenly across the circumference of the outlet tube (110, 210) .

5. The beverage outlet (1) according to one of claims 1 to 4, **characterized in that** the outlet opening-side end (112, 212) of the outlet tube (110, 210) has an acute-angled or rectangular edge (113, 213) towards the central axis (M) of the outlet tube (110, 210).

6. The beverage outlet (1) according to one of claims 1 to 5, **characterized in that** the beverage guide element (120) is embodied as cylinder comprising a round, square or evenly polyhedral cross section, area by area, in particular in the first and/or in the second section (121, 122) of the beverage guide element (120).

7. The beverage outlet (1) according to one of claims 1 to 6, **characterized in that** each of the wings (223) extends in longitudinal direction of the beverage guide element (220) across the entire length of the second section (222) and/or also extends at least area by area across the first section (221) of the beverage guide element (220).

8. The beverage outlet (1) according to one of claims 1 to 7, **characterized in that** each of the wings (223) extends radially to the outlet opening-side end (212) of the outlet tube (210) and/or to the inside of the outlet tube (210), in particular is connected to the outlet opening-side end (212) and/or to the inside of the outlet tube (210) .

9. The beverage outlet (1) according to one of claims 1 to 8, **characterized in that** each of the wings (223) has a wing edge (224), which points in beverage dispensing direction (D) and which is inclined in beverage dispensing direction (D) towards the central axis (M) of the outlet tube (210) at an angle (α) of less than 90°, in particular of larger than 45°, preferably less than 60°.

10. The beverage outlet (1) according to one of claims 1 to 9, **characterized in that** the beverage guide element (220) is embodied in one piece with the wings (223).

11. The beverage outlet (1) according to one of the preceding claims, **characterized in that** the second section (122, 222) of the beverage guide element (120, 220) projects at least 4 mm, preferably at least 6 mm, from the outlet opening (111, 211) of the outlet tube (110, 210) in beverage dispensing direction (D).

12. A beverage preparation machine (2), for example coffee maker, comprising a beverage outlet (1) according to one of the preceding claims.

## Revendications

1. Verseur de boisson (1) pour machine de préparation de boisson (2), par exemple pour machine à café, comportant un tuyau verseur (110, 210) qui peut être relié par un bout à une machine de préparation de boisson (2) et présente à l'autre bout (112, 212) un orifice verseur (111, 211) pour distribuer une boisson de la machine de préparation de boisson (2), de même qu'un élément de guidage de boisson (120, 220) s'étendant coaxialement par rapport au tuyau verseur (110, 210) et qui est disposé par une première section (121, 221) à l'intérieur du tuyau verseur (110, 210) et dépasse par une seconde section (122, 222) de l'orifice verseur (111, 211) du tuyau verseur (110, 210), **caractérisé en ce que** le tuyau verseur (110, 210) présente trois ou plus de trois incisions (215) s'étendant à l'avant depuis le bout situé au niveau de l'orifice verseur (112, 212) du tuyau verseur (110, 210) dans le sens inverse du sens de distribution de boisson (D), chacune de ces incisions (215) constituant un orifice traversant entre l'intérieur et l'extérieur du tuyau verseur (110, 210),
l'élément de guidage de boisson (220) présentant, du moins au niveau de la seconde section (222), trois ou plus de trois pales (223) et cette pale s'étendant radialement vers l'extérieur depuis l'axe médian (M) du tuyau verseur (210),
les pales (223) étant réparties régulièrement par rapport à la circonférence du tuyau verseur (210), et
le nombre de pales (223) équivalant au nombre d'incisions (215) du tuyau verseur (210) et les incisions (215) étant réparties sur la circonférence du tuyau verseur (210) de manière à ce que respectivement une incision (215) soit associée à chaque espace segmentaire entre deux pales voisines (223) .

2. Verseur de boisson (1) selon la revendication 1, **caractérisé en ce que** chacune des incisions (115, 215) présente une forme demi-circulaire, rectangulaire, quadratique, triangulaire ou trapézoïdale.

3. Verseur de boisson (1) selon la revendication 1 ou 2, **caractérisé en ce que** chacune des incisions (115, 215) présente, au bout situé au niveau de l'orifice verseur (112, 212) du tuyau verseur (110, 210), dans le sens circonférentiel du tuyau verseur, une largeur (B) qui est supérieure ou égale à la profondeur (T) de l'incision (115, 215) dans le sens longitudinal du tuyau verseur (110, 210) .

4. Verseur de boisson (1) selon une des revendications 1 à 3, **caractérisé en ce que** les incisions (215) sont réparties régulièrement sur la circonférence du tuyau verseur (110, 210).

5. Verseur de boisson (1) selon une des revendications 1 à 4, **caractérisé en ce que** le bout situé au niveau de l'orifice verseur (112, 212) du tuyau verseur (110, 210) présente, en direction de l'axe médian (M) du tuyau verseur (110, 210), une arête en forme d'angle aigu ou d'angle droit (113, 213).

6. Verseur de boisson (1) selon une des revendications 1 à 5, **caractérisé en ce que** l'élément de guidage de boisson (120) est constitué par endroits, en particulier dans la première et/ou dans la seconde section (121, 122) de l'élément de guidage de boisson (120), en forme de cylindre à section transversale ronde, quadratique ou régulièrement polyédrique.

7. Verseur de boisson (1) selon une des revendications 1 à 6, **caractérisé en ce que** chacune des pales (223) s'étend dans le sens longitudinal de l'élément de guidage de boisson (220) sur toute la longueur de la seconde section (222) et/ou s'étend du moins par endroits également sur la première section (221) de l'élément de guidage de boisson (220).

8. Verseur de boisson (1) selon une des revendications 1 à 7, **caractérisé en ce que** chacune des pales (223) s'étend radialement jusqu'au bout situé au niveau de l'orifice verseur (212) du tuyau verseur (210) et/ou jusqu'à la face interne du tuyau verseur (210) et est en particulier reliée au bout situé au niveau de l'orifice verseur (212) et/ou est reliée à la face interne du tuyau verseur (210).

9. Verseur de boisson (1) selon une des revendications 1 à 8, **caractérisé en ce que** chacune des pales (223) présente une arête de pale (224) orientée dans le sens de distribution de boisson (D) et qui est inclinée dans le sens de distribution de boisson (D) vers l'axe médian (M) du tuyau verseur (210) en décrivant un angle (α) inférieur à 90°, en particulier supérieur à 45°, de préférence inférieur à 60°.

10. Verseur de boisson (1) selon une des revendications 1 à 9, **caractérisé en ce que** l'élément de guidage de boisson (220) est réalisé en une seule pièce avec les pales (223).

11. Verseur de boisson (1) selon une des revendications précédentes, **caractérisé en ce que** la seconde section (122, 222) de l'élément de guidage de boisson (120, 220) dépasse d'au moins 4 mm, de préférence d'au moins 6 mm, de l'orifice verseur (111, 211) du tuyau verseur (110, 210) dans le sens de distribution de boisson (D) .

12. Machine de préparation de boisson (2), par exemple machine à café, comportant un verseur de boisson (1) selon une des revendications précédentes.
